# EUROPÄISCHE PATENTSCHRIFT

(11) **EP 2 778 600 B1**
(45) Veröffentlichungstag und Bekanntmachung des Hinweises auf die Patenterteilung: **02.09.2020**
(21) Anmeldenummer: 14160236.7
(22) Anmeldetag: 17.03.2014
(51) Int. Cl.: G01B 7/14, G01B 5/14, G01B 7/16

(54) **Messeinheit und Vorrichtung zur Vermessung von Spalten und/oder Aussparungen**
Measuring unit and apparatus for measuring gaps and/or openings
Unité de mesure et dispositif de mesure d'évidement et/ou d'espacements

(30) Priorität: 15.03.2013 DE 102013004527
(43) Veröffentlichungstag der Anmeldung: 17.09.2014
(73) Patentinhaber: MFP Messtechnik und Fertigungstechnologie GmbH, 31515 Wunstorf (DE)
(72) Erfinder: PATZKE, Dr. -Ing. Matthias, 31515 Wunstorf (DE)
(74) Vertreter: Patentanwälte Thömen & Körner

(56) Entgegenhaltungen:
- DE-A1- 10 015 155
- US-A- 5 070 622
- US-A- 5 934 140
- US-A1- 2002 079 726

## Beschreibung

Die Erfindung betrifft eine Messeinheit nach dem Oberbegriff des Anspruchs 1 und eine Messvorrichtung nach dem Oberbegriff des Anspruchs 10 zur Vermessung von Spalten und/oder Aussparungen.

Zwischen zwei benachbarten Bauteilen eines Gegenstandes bildet sich in der Regel ein Spalt aus. Die Breite dieses Spaltes oder der Abstand der benachbarten Bauteile wird als Spaltmaß bezeichnet. Insbesondere im Maschinen- und Karosseriebau spielt dieses Maß eine wichtige Rolle. So ist es beispielsweise im Automobilbereich besonders wichtig, dass nach außen sichtbare Spalte ein gleichbleibendes Spaltmaß über die gesamte Länge des Spaltes aufweisen.

Dabei ist es nicht unüblich, dass an einem Gegenstand Spalte mit unterschiedlichen Spaltmaßen vorhanden sind, wobei die Spalte Breiten von ungefähr 10 mm bis in Bereiche unter 1 mm aufweisen können. In den letzten Jahren ging die Entwicklung verstärkt in Richtung von Spalten mit einem Spaltmaß von unter einem Millimeter. Jedoch sind gerade diese Spalte mit geringen Breiten von außen zumeist schlecht zugänglich.

Um Spalte einfach und sicher zu vermessen werden heutzutage zumeist optische Spaltmessgeräte eingesetzt. Es existieren jedoch auch Spaltmessgeräte, die auf einer mechanischen Messmethode beruhen.

So wird beispielsweise in der DE 100 15 155 A1 ein Spaltmessgerät beschrieben, das über ein elastisches Element verfügt, welches sich beim Einbringen in einen Spalt verbiegt. An diesem elastischen Element sind beidseitig Widerstandselemente, insbesondere Dehnungsmessstreifen angebracht, deren Widerstand sich proportional zur Verformung des Widerstandselements verändert. Über die Messung der Widerstandswerte können Rückschlüsse auf die Verformung des elastischen Elements gezogen werden. Um in Spalten mit unterschiedlichen Spaltbreiten eingesetzt werden zu können, kann an die Unterseite der Halterung des elastischen Elements ein Abstandselement angebracht werden.

Ein anderes Spaltmessgerät wird in der DE 27 50 461 A1 beschrieben. Das dort beschriebene Spaltmessgerät umfasst zwei steife Arme und ein, die Arme verbindendes, elastisches Element. Auf beiden Seiten des elastischen Elements ist, wie auch in der DE 100 15 155 A1 ein Dehnungsmessstreifen angebracht. Zur Vermessung des Spalts werden die Arme zueinander gedrückt, wobei sich das elastische Element verbiegt. Nachdem die Arme in den Spalt eingebracht wurden, wird die externe Kraft zum Zusammendrücken der Arme entfernt und die Arme streben ihrer Ausgangslage entgegen, bis sie an die Begrenzung des Spaltes stoßen. Die verbleidende Verbiegung des elastischen Elements wird abermals über die Widerstandswerte der Dehnungsmessstreifen abgegriffen und daraus die Spaltbreite berechnet.

Beide Messgeräte weisen den Nachteil auf, dass sie nur bei vergleichsweise breiten Spalten eingesetzt werden können und für Spaltbreiten unter einem Millimeter nicht eingesetzt werden können. Darüber hinaus sind beide Messgeräte entlang ihrer Längsachse steif ausgebildet. In der DE 27 50 461 A1 sind die Arme nicht flexibel und in der DE 100 15 155 A1 ist die Halterung des elastischen Elements nicht flexibel ausgebildet. Somit ist es nicht möglich, einen Spalt zwischen zwei Rundkörpern entlang deren Rundung zu vermessen.

Für Spalte mit einer Breite von unter einem Millimeter haben sich optische Messmethoden in weiten Bereichen der Industrie durchgesetzt. Optische Messmethoden zur Spaltbreitenvermessung sind in der Lage, Spalte mit Breiten unter einem Millimeter sehr genau aufzulösen. Dazu wird zumeist die Messvorrichtung auf den zu vermessenden Spalt aufgesetzt und dieser Spalt mittels Lichts vermessen. Für ein fehlerfreies Messergebnis ist es bei einer derartigen Messmethode jedoch erforderlich, dass die Messvorrichtung eben auf dem Spalt aufliegt und nicht verkippt ist. Ein Einsatz bei einem Spalt, bei dem die Bauteile eine unterschiedliche Höhe aufweisen, ist zumeist nicht möglich. Zudem müssen bei optischen Verfahren die Materialoberflächen berücksichtigt werden. Folglich kann eine derartige Messvorrichtung nicht bei beliebigen Spalten eingesetzt werden, was den Anwendungsbereich stark einschränkt.

Die derzeit bekannten Systeme sind nur eingeschränkt befähigt Spalte über einen großen Spaltbreitenbereich zu vermessen. Des Weiteren ist die Herstellung eines optischen Spaltmessgeräts aufwendig und teuer.

Aus der US 5 934 140 A ist eine Messeinheit zur Bestimmung physikalischer Eigenschaften eines Blattes Papier, wie insbesondere dessen Dicke, Masse und Steifigkeit bekannt. Die Messeinheit umfasst wenigstens ein Basiselement und wenigstens eine mit dem Basiselement verbundene Sensoreinheit mit einem Dehnungsmessstreifen und eine den Dehnungsmessstreifen kontaktierende elektrischen Leitung.

Aus der US 2002/079 726 A1 ist eine Messeinheit zur Vermessung einer mit einem Medium gefüllten Blase in wenigstens einer Dimension und zur Detektion der Belastung einer Oberfläche, insbesondere der eines mit Blasen gefüllten Sitzes, bekannt.

Aus der US 5 070 622 A ist eine Messeinheit zur Messung von Spalten bekannt. Als Sensoreinheit dienen zwei zusammendrückbare biegsame Arme, auf deren Innenseiten Widerstandsbahnen angeordnet sind. Beim Zusammendrücken werden die Widerstandsbahnen entlang eines wandernden Punktes aufeinandergedrückt und kurzgeschlossen, so dass sich die Summe aus den verbleibenden Widerstandsteilen verändert.

Aufgrund der genannten Nachteile werden in vielen Bereichen der Industrie, wie beispielsweise auch der Automobilindustrie, keine der vorgenannten Spaltmessgeräte zur Spaltbreitenvermessung eingesetzt, sondern die Spaltbreiten werden noch mit Parallelendmaßen, Fühlerlehren oder Stiftspionen bestimmt.

Der vorliegenden Erfindung liegt somit die Aufgabe zugrunde, die genannten Probleme beim Vermessen eines Spaltes oder einer Aussparung zu beseitigen und insbesondere eine Spaltmessvorrichtung bereit zu stellen, die eine erhöhte Einsatzflexibilität aufweist und insbesondere bei Spalten mit einer Breite von ungefähr zehn Millimeter bis unter einem Millimeter einsetzbar ist.

Diese Aufgabe wird bei einer Messeinheit durch die Merkmale des Anspruchs 1 und bei einer Messvorrichtung durch die Merkmale des Anspruchs 10 gelöst. Weiterbildungen und vorteilhafte Ausgestaltungen ergeben sich aus den abhängigen Ansprüchen.

Die Erfindung ermöglicht es, kleinste Wegesensoren durch Blattfedern und Dehnungsmessstreifen konstruktiv so aufzubauen, dass diese beispielsweise in Spalte unter 1mm Spaltbreite eingeführt, auf Trägern zur Messung kleiner Innendurchmesser montiert oder bei anderen stark beengten Verhältnissen eingesetzt werden können. Insbesondere können minimale Spalte von unter 1 mm und Aussparungen von unter 5 mm Durchmesser taktil und dementsprechend genau vermessen werden.

Aufgrund der konstruktiven Gestaltung der Messeinheit ermöglicht diese eine erhöhte Einsatzflexibilität. So lässt sich diese je nach konkreter Ausgestaltung in unterschiedlichsten Spalten oder Aussparungen mit einer Ausdehnung zwischen 0,5 mm und 15 mm einsetzen. Dabei spielt es keine Rolle, wie tief die Spalte oder Aussparungen sind oder ob sie eine Krümmung aufweisen.

Um die Messeinheit für die direkte Innenmessung ohne Umlenkung unter beengten Verhältnissen einsetzen zu können, ist in Messrichtung eine möglichst geringe Messeinheitenabmessung bei hohem Messweg realisiert. Durch die erfindungsgemäße Ausgestaltung der Messeinheit wird ein Verhältnis von Messweg zu Abmessung von bis zu 10 erreicht. Speziell wird das hohe Verhältnis von Messweg zu Abmessung durch eine spezielle Abstimmung von der Länge der Blattfeder, der Ausformung des Hohlraums und der Befestigung des Dehnungsmessstreifens erreicht.

In der Ausführung als Messeinheit für Spalte umfasst die Erfindung zwei Sensoreinheiten, die symmetrisch zueinander derart angeordnet sind, dass die Sensoreinheiten einen seitlich offenen Hohlraum ausbilden und sich gegeneinander so abstützen, dass die Sensoreinheiten sich beim Einbringen in einen Spalt oder eine Aussparung selbstständig aufgrund der Rückstellkräfte der Blattfedern zentrieren und an den Innenseiten des Spalts oder der Aussparung abstützen, wobei eine federnde oder gelenke Verbindung mit einem Handgriff die Ausrichtung der Sensoreinheit erlaubt.

Weiterhin sind die Blattfederelemente so gebogen, dass sie in einen schmalen Spalt eingeführt werden können und sich dabei automatisch zusammendrücken. Der Kontakt zum Messobjekt kann über die Blattfederelemente selbst oder über auf diesen angebrachten Kontaktelementen erfolgen.

Die Anordnung eines Kontaktelements an die Blattfeder hat den Vorteil, dass die Kontaktfläche zwischen Sensoreinheit und Innenseite des zu vermessenden Spalts oder der Aussparung möglichst gering gehalten werden kann. Vorteilhafterweise ist das Kontaktelement zumindest weitestgehend als Kugel ausgeformt. Folglich ist auch ein Einsatz der Messeinheit in Spalten oder Aussparungen möglich, die eine Innenwand besitzen, die einen Radius aufweist.

Um die Widerstandswerte des Dehnungsmessstreifens an die Auswerteeinheit zu übermitteln, ist die Messeinheit mit einem entsprechenden Anschluss versehen. Durch einen reversibel verbindbaren Anschluss ist gewährleistet, dass die Messeinheit von der Messvorrichtung entfernt, ausgetauscht und/oder angeschlossen werden kann.

Es ist vorteilhaft, wenn die Basiselemente und die zumindest weitestgehend konvex geformten Blattfedern der an den Basiselementen angeordneten Sensoreinheiten jeweils einteilig ausgebildet sind.

Zweckmäßigerweise weist die Messeinheit eine Breite zwischen 1 mm und 15 mm auf.

Durch eine schmale Ausgestaltung der Messeinheit im Bereich von 1 mm ist es möglich auch Spalte zu vermessen, die nicht entlang einer geraden Linie verlaufen, wie beispielsweise Spalte um Rundelemente im Automobilbau.

Eine vorteilhafte Ausgestaltung sieht vor, dass die Messeinheit in dem nicht konvex ausgebildeten Bereich eine Stärke von weniger als 1 mm, bevorzugt von weniger als 0,7 mm, besonders bevorzugt von weniger als 0,5 mm und ganz besonders bevorzugt von weniger als 0,3 mm aufweist.

Durch den Einsatz von Blattfedern mit einer Dicke zwischen 0,05 mm und 0,15 mm als Basiselemente ist es möglich, Messeinheiten zu konstruieren, die in dem nicht konvex ausgebildeten Bereich eine Stärke von weniger als 0,5 mm aufweisen. Eine derart dünne Ausgestaltung ermöglicht es auch Spalte mit einer Breite von weniger als 1 mm verlässlich zu vermessen. Darüber gewährt eine dünne Ausgestaltung der Messeinheit die nötige Flexibilität, um auch Spalte zwischen zwei ineinander angeordneten Körpern mit rundem Querschnitt zu vermessen.

Es ist zweckmäßig, wenn die Messeinheit ein Anschlagselement umfasst, das bündig mit der Messachse abschließt.

Um sicherzustellen, dass die Messung entlang der Messachse verläuft, kann es vorteilhaft sein, die Messeinheit mit einem Anschlagselement oder einer Umhüllung zu versehen, die bündig mit der Messachse abschließt. Eine derartige Ausgestaltung verhindert, dass die Messeinheit zu tief in einen Spalt eingebracht wird und die Spaltbreitenmessung möglicherweise nicht entlang der Messachse der Messeinheit erfolgt.

Eine vorteilhafte Weiterentwicklung sieht vor, dass zusätzlich zur oder anstelle der elektrischen Leitung eine Folienplatine verbaut ist.

Der Einsatz einer Folienplatine ermöglicht es, nötige elektrische Schaltungen bereits in der Messeinheit zu realisieren. Dadurch sind die Messeinheit und die erzeugten Signale weniger störanfällig von äußeren Einflüssen. Darüber hinaus können Folienplatinen flexibel und mit einer sehr geringen Dicke hergestellt werden, wodurch die Stärke der Messeinheit weiter verringert werden kann.

Es ist zweckmäßig, wenn wenigstens ein Dehnungsmessstreifen auf der Folienplatine angeordnet ist.

In der Regel werden zur Bestimmung des Widerstandswertes des Dehnungsmessstreifens mehrere Widerstände zu einer Vollbrücke zusammen geschaltet. Eine mögliche Ausgestaltung, in der die zusätzlichen Widerstände auf einer Folienplatine aufgebracht sind, ermöglicht einen vereinfachten konstruktiven Aufbau der Messeinheit.

Es ist vorteilhaft, wenn die Längsachse des Basiselements und die Längsachse der Sensoreinheit fluchtend verlaufen, einen Parallelversatz aufweisen und/oder einen Winkel einschließen.

Möglicherweise ist ein zu vermessender Spalt nicht tief genug, damit die Messeinheit genügend tief in den Spalt eindringen kann, so dass sich die Messachse vollständig im Spalt befindet. In solchen Fällen ist es zweckmäßig eine Messeinheit zu verwenden, dessen vorderes Ende, in dem sich der seitlich offene Hohlraum und somit auch die Messachse befindet, einen Winkel zur restlichen Messeinheit einnimmt oder einen Parallelversatz zu dieser aufweist. Dadurch ist es möglich den Hohlkörper seitlich in den Spalt einzuführen und sicherzustellen, dass die Sensoreinheit gleichmäßig entlang der Messachse elastisch verformt wird.

Zweckmäßigerweise ist das Basiselement federelastisch ausgebildet, aber steif genug, so dass sich das Basiselement unter Einfluss der Gravitation nicht verbiegt.

Eine federelastische Ausgestaltung des Basiselements ermöglicht es, die Messeinheit auch in Spalte einzuführen, die von zwei ineinander angeordneten Körpern mit rundem Querschnitt, wie beispielsweise einem Rotor und einer Maschinenwandung, ausgebildet werden. Dadurch, dass das Basiselement steif genug ist, so dass es sich unter Einfluss der Gravitation nicht verbiegt, ermöglicht es Messeinheiten von über 1 Meter Länge zu konstruieren und diese in weit entfernte Spalte einzuführen.

Die erfindungsgemäße Messvorrichtung umfasst wenigstens eine Messeinheit nach einem der Ansprüche 1 bis 9, einen Handgriff, eine Auswerteeinheit und eine elektrische Leitung, die den Handgriff mit der Auswerteeinheit verbindet, wobei die Messeinheit reversibel mit dem Handgriff verbindbar ist.

Durch eine reversible Verbindung der Messeinheit mit dem Handgriff ist es möglich, die elektronischen Komponenten, die für unterschiedliche Messeinheiten identisch sind, zusammenzufassen und beispielsweise im Handgriff der Messvorrichtung zu verbauen. Somit müssen lediglich die messeinheitsspezifischen Bauteile in der Messeinheit angeordnet werden. Eine derartige Ausgestaltung ermöglicht einen schnellen Wechsel zwischen verschiedenen Messeinheiten.

Es ist vorteilhaft, wenn der Handgriff eine Identifikationseinheit umfasst, die automatisch die angeschlossene Messeinheit erkennt.

Durch eine erfindungsgemäße Identifikationseinheit ist es möglich, die Messeinheit am Handgriff zu wechseln und ohne Zwischenschritt, insbesondere einer neuen Kalibrierung der Messvorrichtung mit der Messung fortzufahren. Zuvor gespeicherte Kalibrationsdaten werden automatisch aus einem Speicherort ausgelesen und der Auswerteeinheit zur Verfügung gestellt. Eine Identifikation der Messeinheit kann beispielsweise über unterschiedliche elektronische Verschaltungen realisiert werden.

Weiterbildungen und vorteilhafte Ausgestaltungen der Erfindung können sich auch aus den nachfolgenden Beschreibungen von Ausführungsbeispielen ergeben, die in der Zeichnung dargestellt sind. In dieser zeigen:
- Fig. 1: eine erfindungsgemäße Messeinheit in der Seitenansicht,
- Fig. 2: eine erfindungsgemäße Messeinheit in der Draufsicht,
- Fig. 3: eine erfindungsgemäße Messeinheit in der Draufsicht, wobei die Längsachse des Basiselements und die Längsachse der Sensoreinheit einen Winkel einschließen,
- Fig. 4: eine erfindungsgemäße Messeinheit in der Draufsicht, wobei die Längsachse des Basiselements und die Längsachse der Sensoreinheit einen Parallelversatz aufweisen,
- Fig. 5: eine erfindungsgemäße Messeinheit in der Seitenansicht, wobei mehrere Sensoreinheiten am Basiselement angeordnet und mittels Zwischenelementen paarweise verbunden sind,
- Fig. 12: eine erfindungsgemäße Messvorrichtung umfassend eine mit einem Handgriff verbundene Messeinheit, eine Auswerteeinheit und eine elektrische Verbindung zwischen Handgriff und Auswerteeinheit.

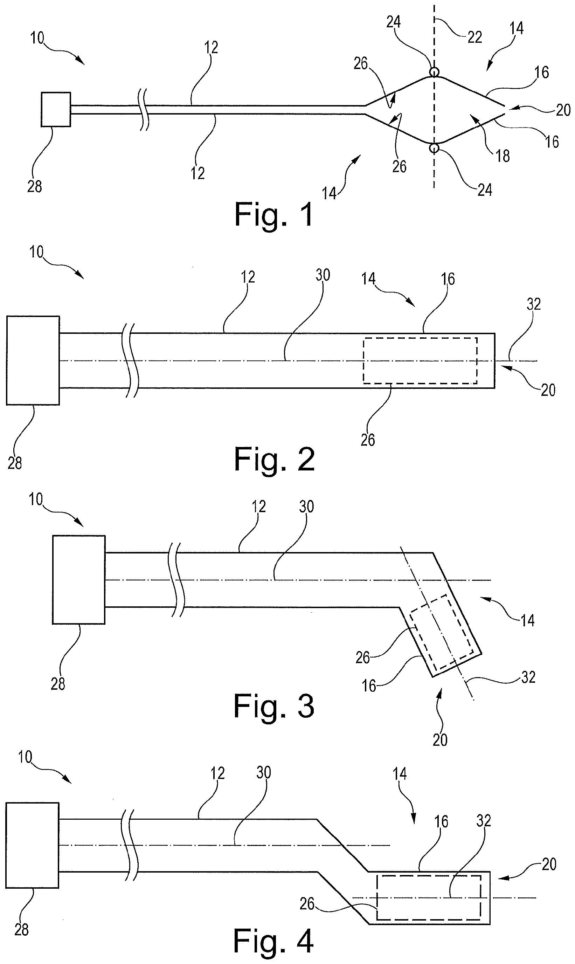

Fig. 1 zeigt eine Messeinheit 10, umfassend zwei Basiselemente 12 und zwei Sensoreinheiten 14 mit jeweils einer im entspannten Zustand konvex geformten Blattfeder 16, deren konvexe Bereiche symmetrisch angeordnet sind und einen seitlich offenen Hohlraum 18 ausbilden, in der Seitenansicht. Die Sensoreinheit, umfassend die konvex ausgeformten Blattfeder, bildet die Spitze 20 der Messeinheit 10. Senkrecht durch den Bereich der größten Ausdehnung des Hohlraums 18 verläuft die Messachse 22 der Messeinheit 10. An den Außenseiten der konkav ausgeformten Blattfedern 16 ist jeweils ein Kontaktelement 24 fluchtend mit der Messachse angeordnet. Im Bereich des Hohlraums 18 ist auf die Innenseite der oberen Blattfeder 16 ein Dehnungsmessstreifen 26 angebracht. An dem der Spitze 20 gegenüberliegenden Ende der Basiselemente 12 ist ein mechanisch und elektrisch reversibel verbindbarer Anschluss 28 angeordnet. Die den Dehnungsmessstreifen 26 kontaktierende, elektrische Leitung ist zwischen den beiden Basiselementen 12 angeordnet (nicht gezeigt).

Fig. 2 zeigt eine Messeinheit 10 in Draufsicht. Im Bereich des Hohlraums 18 ist auf die Innenseite einer der Blattfedern 16 ein Dehnungsmessstreifen 26 angebracht. An dem der Spitze 20 gegenüberliegenden Ende ist ein mechanisch und elektrisch reversibel verbindbarer Anschluss 28 angeordnet. In dem in dieser Figur gezeigten Ausführungsbeispiel verlaufen die Längsachse 30 des Basiselements 12 und die Längsachse 32 der Sensoreinheit 14 fluchtend.

Fig. 3 zeigt eine ähnliche Messeinheit 10 wie Fig. 2, jedoch schließen die Längsachse 30 des Basiselements 12 und die Längsachse 32 der Sensoreinheit 14 einen Winkel ein.

Fig. 4 zeigt eine ähnliche Messeinheit 10 wie Fig. 2 oder Fig. 3, jedoch weisen die Längsachse 30 des Basiselements 12 und die Längsachse 32 der Sensoreinheit 14 einen Parallelversatz auf.

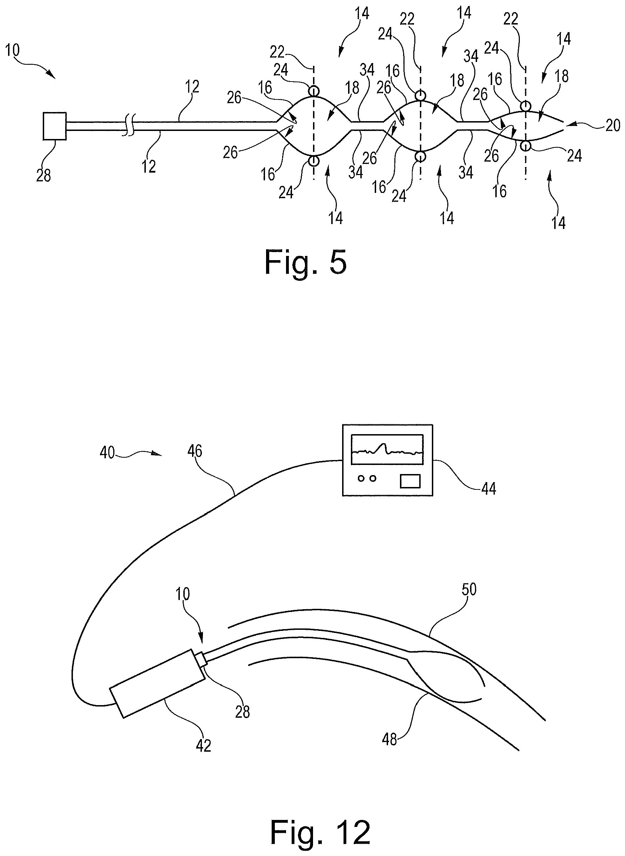

Fig. 5 zeigt eine Messeinheit 10 umfassend zwei Basiselemente 12 und sechs Sensoreinheiten 14 mit jeweils einer im entspannten Zustand konvex geformten Blattfeder 16, wobei immer zwei Sensoreinheiten 14 symmetrisch zueinander angeordnet sind und einen seitlich offenen Hohlraum 18 ausbilden, in der Seitenansicht. Die einzelnen Sensoreinheiten 14 eines Sensorstrangs sind über Zwischenelemente 34 miteinander verbunden. Senkrecht durch den größten Bereich eines jeden Hohlraums 18 verläuft jeweils eine Messachse 22. Die Ausdehnung des Hohlraums 18 entlang der Messachse 22 nimmt dabei von der Spitze 20 in Richtung der Basiselemente 12 zu. An den Außenseiten der konkav ausgeformten Blattfedern 16 ist jeweils ein Kontaktelement 24 fluchtend mit der Messachse 22 angeordnet. Im Bereich der Hohlräume 18 ist auf wenigstens einer Innenseite einer der Blattfedern 16 eines jeden Hohlraums 18 jeweils wenigstens ein Dehnungsmessstreifen 26 angebracht. An dem der Spitze 20 gegenüberliegenden Ende der Basiselemente 12 ist ein mechanisch und elektrisch reversibel verbindbarer Anschluss 28 angeordnet. Die die Dehnungsmessstreifen 26 kontaktierenden, elektrischen Leitungen sind zwischen den beiden Basiselementen 12 angeordnet (nicht gezeigt).

Fig. 12 zeigt eine Messvorrichtung 40 umfassend einen Handgriff 42, eine Messeinheit 10, eine Auswerteinheit 44 und eine die Auswerteeinheit 44 mit dem Handgriff 42 verbindende elektrische Leitung 46. Die Messeinheit 10 ist dabei über den reversibel verbindbaren Anschluss 28 mit dem Handgriff 42 verbunden. Des Weiteren zeigt die Figur die erfindungsgemäße Messvorrichtung 40 bei der Vermessung eines Spalts zwischen zwei ineinander angeordneten Körpern mit rundem Querschnitt, wie beispielsweise einem Rotor 48 und einer Maschinenwandung 50. Aufgrund der flexiblen Ausgestaltung der Messeinheit 10 kann sich diese der Kontur des Rotors 48 und des Maschinengehäuses 50 anpassen, ohne dass die Spaltbreitenmessung verfälscht wird.

### Bezugszeichenliste

(ist Teil der Beschreibung)
- 10: Messeinheit
- 12: Basiselement
- 14: Sensoreinheit
- 16: Blattfeder
- 18: Hohlraum
- 20: Spitze
- 22: Messachse
- 24: Kontaktelement
- 26: Dehnungsmessstreifen
- 28: Anschluss
- 30: Längsachse
- 32: Längsachse
- 34: Zwischenelement
- 40: Messvorrichtung
- 42: Handgriff
- 44: Auswerteeinheit
- 46: elektrische Leitung
- 48: Rotor
- 50: Maschinenwandung

## Patentansprüche

1. Messeinheit (10) zur Messung von Spalten und/oder Aussparungen, umfassend zwei Basiselemente (12) und mindestens zwei Sensoreinheiten (14) mit jeweils einer im entspannten Zustand konvex geformten Blattfeder (16), wobei jeweils mindestens eine Sensoreinheit (14) mit einem Basiselement (12) verbunden ist, wobei jede Sensoreinheit (14) mit der im entspannten Zustand konvex geformten Blattfeder (16) einen seitlich offenen Hohlraum (18) ausbildet und eine Spitze (20) der Messeinheit (10) bildet, wobei senkrecht durch einen Bereich der größten Ausdehnung des Hohlraums (18) eine Messachse (22) der Messeinheit (10) verläuft, wobei im Bereich des Hohlraums (18) auf den Innenseiten der Blattfeder (16) ein Dehnungsmessstreifen (26) angebracht ist, wobei an dem der Spitze (20) gegenüberliegenden Ende der Basiselemente (12) ein mechanisch und elektrisch reversibel verbindbarer Anschluss (28) angeordnet ist und wobei die den jeweiligen Dehnungsmessstreifen (26) kontaktierenden, elektrischen Leitungen zwischen den beiden Basiselementen (12) angeordnet sind.

2. Messeinheit (10) nach Anspruch 1, **dadurch gekennzeichnet, dass** die Basiselemente (12) und die zumindest weitestgehend konvex geformten Blattfedern (16) der an den Basiselementen (12) angeordneten Sensoreinheiten (14) jeweils einteilig ausgebildet sind.

3. Messeinheit (10) nach einem der Ansprüche 1 bis 2, **dadurch gekennzeichnet, dass** die Messeinheit (10) eine Breite zwischen 1 mm und 15 mm aufweist.

4. Messeinheit (10) nach einem der Ansprüche 1 bis 3, **dadurch gekennzeichnet, dass** die Messeinheit (10) in dem nicht konvex ausgebildeten Bereich eine Stärke von weniger als 1 mm, bevorzugt von weniger als 0,7 mm, besonders bevorzugt von weniger als 0,5 mm und ganz besonders bevorzugt von weniger als 0,3 mm aufweist.

5. Messeinheit (10) nach einem der Ansprüche 1 bis 4, **dadurch gekennzeichnet. dass** die Messeinheit (10) ein Anschlagselement umfasst, das bündig mit der Messachse (22) abschließt.

6. Messeinheit (10) nach einem der Ansprüche 1 bis 5, **dadurch gekennzeichnet, dass** zusätzlich zur oder anstelle der elektrischen Leitung eine Folienplatine verbaut ist.

7. Messeinheit (10) nach Anspruch 6, **dadurch gekennzeichnet, dass** wenigstens ein Dehnungsmessstreifen (26) auf einer Folienplatine angeordnet ist.

8. Messeinheit (10) nach einem der Ansprüche 1 bis 7, **dadurch gekennzeichnet, dass** eine Längsachse (30) der Basiselemente (12) und eine Längsachse (32) der Sensoreinheiten (14) fluchtend verlaufen, einen Parallelversatz aufweisen und/oder einen Winkel einschließen.

9. Messeinheit (10) nach einem der Ansprüche 1 bis 8, **dadurch gekennzeichnet, dass** die Basiselemente (12) federelastisch ausgebildet, aber steif genug sind, so dass sich die Basiselemente (12) unter Einfluss der Gravitation nicht verbiegen.

10. Messvorrichtung (40) umfassend wenigstens eine Messeinheit (10) nach einem der Ansprüche 1 bis 9, einen Handgriff (42), eine Auswerteeinheit (44) und eine elektrische Leitung (46), die den Handgriff (42) mit der Auswerteeinheit (44) verbindet, **dadurch gekennzeichnet, dass** die Messeinheit (10) reversibel mit dem Handgriff (42) verbindbar ist.

11. Messvorrichtung (40) nach Anspruch 10, **dadurch gekennzeichnet, dass** der Handgriff (42) eine Identifikationseinheit umfasst, die automatisch die angeschlossene Messeinheit (10) erkennt.

## Claims

1. Measuring unit (10) for measuring gaps and/or cutouts, comprising two base elements (12) and at least two sensor units (14) each having a leaf spring (16) that is of convex shape in the relaxed state, wherein in each case at least one sensor unit (14) is connected to a base element (12), wherein each sensor unit (14) forms, with the leaf spring (16) of convex shape in the relaxed state, a laterally open cavity (18) and forms a tip (20) of the measuring unit (10), wherein a measuring axis (22) of the measuring unit (10) extends perpendicularly through a region of greatest extent of the cavity (18), wherein a strain gauge (26) is attached to the inner sides of the leaf spring (16) in the region of the cavity (18), wherein at the opposite end of the base elements (12) from the tip (20), a mechanically and electrically reversibly connectable connection (28) is arranged, and wherein the electric lines that contact the respective strain gauges (26) are arranged between the two base elements (12).

2. Measuring unit (10) according to Claim 1, **characterized in that** the base elements (12) and the leaf springs (16) of at least largely convex shape of the sensor units (14) arranged on the base elements (12) are each formed in one piece.

3. Measuring unit (10) according to either of Claims 1 and 2, **characterized in that** the measuring unit (10) has a width of between 1 mm and 15 mm.

4. Measuring unit (10) according to one of Claims 1 to 3, **characterized in that** the measuring unit (10) has, in the region not formed in a convex manner, a thickness of less than 1 mm, preferably less than 0.7 mm, particularly preferably less than 0.5 mm, and very particularly preferably less than 0.3 mm.

5. Measuring unit (10) according to one of Claims 1 to 4, **characterized in that** the measuring unit (10) comprises a stop element, which terminates flush with the measuring axis (22).

6. Measuring unit (10) according to one of Claims 1 to 5, **characterized in that** a foil circuit board is installed in addition to or instead of the electric line.

7. Measuring unit (10) according to Claim 6, **characterized in that** at least one strain gauge (26) is arranged on the foil circuit board.

8. Measuring unit (10) according to one of Claims 1 to 7, **characterized in that** a longitudinal axis (30) of the base elements (12) and a longitudinal axis (32) of the sensor units (14) extend in an aligned manner, have a parallel offset and/or enclose an angle.

9. Measuring unit (10) according to one of Claims 1 to 8, **characterized in that** the base elements (12) are configured in a spring-elastic manner but are stiff enough for the base elements (12) not to bend under the influence of gravity.

10. Measuring device (40) comprising at least one measuring unit (10) according to one of Claims 1 to 9, a handle (42), an evaluation unit (44) and an electric line (46) that connects the handle (42) to the evaluation unit (44), **characterized in that** the measuring unit (10) is able to be connected reversibly to the handle (42).

11. Measuring device (40) according to Claim 10, **characterized in that** the handle (42) comprises an identification unit that automatically identifies the attached measuring unit (10).

## Revendications

1. Unité de mesure (10) destinée à mesurer des espaces et/ou des creux, l'unité de mesure comprenant deux éléments de base (12) et au moins deux unités de détection (14), pourvus chacun d'un ressort à lame (16) qui est convexe à l'état détendu, au moins une unité de détection (14) étant reliée à un élément de base (12), chaque unité de détection (14) constituant avec le ressort à lame (16), qui est convexe à l'état détendu, une cavité (18) ouverte latéralement et formant une pointe (20) de l'unité de mesure (10), un axe de mesure (22) de l'unité de mesure (10) s'étendant perpendiculairement à travers une région de la plus grande extension de la cavité (18), une jauge de contrainte (26) étant montée sur les côtés intérieurs du ressort à lame (16) dans la région de la cavité (18), un raccord (28), pouvant être relié mécaniquement et électriquement de manière réversible, étant disposé à l'extrémité des éléments de base (12) qui est opposée à la pointe (20) et des lignes électriques en contact avec les jauges de contrainte respectives (26) étant disposées entre les deux éléments de base (12).

2. Unité de mesure (10) selon la revendication 1, **caractérisée en ce que** les éléments de base (12) et les ressorts à lame (16), au moins dans une large mesure convexe, des unités de détection (14) disposées sur les éléments de base (12) sont chacun formés d'une seule pièce.

3. Unité de mesure (10) selon l'une des revendications 1 et 2, **caractérisée en ce que** l'unité de mesure (10) a une largeur comprise entre 1 mm et 15 mm.

4. Unité de mesure (10) selon l'une des revendications 1 à 3, **caractérisée en ce que** l'unité de mesure (10) a dans la région non convexe une épaisseur inférieure à 1 mm, de préférence inférieure à 0,7 mm, de manière particulièrement préférée inférieure à 0,5 mm et de manière tout particulièrement préférée inférieure à 0,3 mm.

5. Unité de mesure (10) selon l'une des revendications 1 à 4, **caractérisée en ce que** l'unité de mesure (10) comprend un élément de butée qui se termine à fleur de l'axe de mesure (22).

6. Unité de mesure (10) selon l'une des revendications 1 à 5, **caractérisée en ce qu'**une carte de circuit imprimé qui se présente sous la forme d'un film est utilisée en plus ou à la place de la ligne électrique.

7. Unité de mesure (10) selon la revendication 6, **caractérisée en ce qu**'au moins une jauge de contrainte (26) est disposée sur une carte de circuit imprimé qui se présente sous la forme d'un film.

8. Unité de mesure (10) selon l'une des revendications 1 à 7, **caractérisée en ce qu**'un axe longitudinal (30) des éléments de base (12) et un axe longitudinal (32) des unités de détection (14) s'étendent en alignement, présentent un décalage parallèle et/ou forment un angle.

9. Unité de mesure (10) selon l'une des revendications 1 à 8, **caractérisée en ce que** les éléments de base (12) sont élastiques, mais suffisamment rigides pour que les éléments de base (12) ne plient pas sous l'influence de la gravité.

10. Dispositif de mesure (40) comprenant au moins une unité de mesure (10) selon l'une des revendications 1 à 9, une poignée (42), une unité d'évaluation (44) et une ligne électrique (46) reliant la poignée (42) à l'unité d'évaluation (44), **caractérisé en ce que** l'unité de mesure (10) peut être reliée de manière réversible à la poignée (42).

11. Dispositif de mesure (40) selon la revendication 10, **caractérisé en ce que** la poignée (42) comprend une unité d'identification qui détecte automatiquement l'unité de mesure (10) raccordée.
